# FASCICULE DE BREVET EUROPEEN

(11) **EP 1 949 619 B1**
(45) Date de publication et mention de la délivrance du brevet: **26.11.2014**
(21) Numéro de dépôt: 06831313.9
(22) Date de dépôt: 27.10.2006
(51) Int. Cl.: H04L 12/70

(54) **ROUTEUR ET RESEAU DE ROUTAGE**
ROUTER UND ROUTING-NETZWERK
ROUTER AND ROUTING NETWORK

(30) Priorité: 28.10.2005 FR 0553280
(43) Date de publication de la demande: 30.07.2008
(73) Titulaire: Centre National de la Recherche Scientifique, 75794 Paris Cedex 16 (FR); Université de Bretagne Sud, 56321 Lorient Cédex (FR)
(72) Inventeur: DIGUET, Jean-Philippe, F-56520 Guidel (FR); EVAIN, Samuel, F-56100 Lorient (FR)
(74) Mandataire: Thibon, Laurent
(86) Numéro de dépôt international: PCT/FR2006/051121
(87) Numéro de publication internationale: WO 2007/048987

(56) Documents cités:
- EVAIN, S.; DIGUET, J.-P.; HOUZET, D.: "A generic CAD tool for efficient NoC design" IEEE INTELLIGENT SIGNAL PROCESSING AND COMMUNICATION SYSTEMS, 2004. ISPACS 2004. PROCEEDINGS OF 2004 INTERNATIONAL SYMPOSIUM ON, 18 novembre 2004 (2004-11-18), - 19 novembre 2004 (2004-11-19) pages 728-733, XP002381911
- YUAN-LONG JEANG ET AL: "A binary tree architecture for application specifle network on chip (ASNOC) design" CIRCUITS AND SYSTEMS, 2004. PROCEEDINGS. THE 2004 IEEE ASIA-PACIFIC CONFERENCE ON TAINAN, TAIWAN DEC. 6-9, 2004, PISCATAWAY, NJ, USA,IEEE, vol. 2, 6 décembre 2004 (2004-12-06), pages 877-880, XP010783369 ISBN: 0-7803-8660-4
- BANERJEE N ET AL: "A power and performance model for network-on-chip architectures" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, vol. 2, 16 février 2004 (2004-02-16), pages 1250-1255, XP010684421 ISBN: 0-7695-2085-5
- SOARES R ET AL: "WHEN RECONFIGURABLE ARCHITECTURE MEETS NETWORK-ON-CHIP" PROCEEDINGS OF THE 17TH. SYMPOSIUM ON INTEGRATED CIRCUITS AND SYSTEMS DESIGN. SBCCI2004. PORTO DE GALINHAS, PERNAMBUCO, BRAZIL, SEPT. 7 - 11, 2004, PROCEEDINGS OF THE SYMPOSIUM ON INTEGRATED CIRCUITS AND SYSTEM DESIGN, NEW YORK, NY : ACM, US, 7 septembre 2004 (2004-09-07), pages 216-221, XP001226269 ISBN: 1-58113-947-0

## Description

### Domaine de l'invention

La présente invention concerne le routage de paquets de données entre divers dispositifs numériques.

### Exposé de l'art antérieur

Dans certains cas, on préfère utiliser des réseaux de routeurs dont chacun est capable de transmettre des messages entre l'une de ses entrées et l'une de ses sorties pendant un créneau temporel donné plutôt que d'utiliser un bus.

Les routeurs et les réseaux de routage sont plus particulièrement adaptés à être intégrés sur une puce de circuit intégré comprenant plusieurs dispositifs tels que des processeurs et des mémoires, pour permettre d'acheminer très rapidement des paquets de données entre les divers dispositifs.

Un routeur est un dispositif comprenant un certain nombre de ports d'entrée et de sortie. On considérera ici que chaque port est un port d'entrée/sortie, étant entendu que les ports d'entrée et de sortie peuvent être distincts, mais que chaque port d'entrée correspondra à un port de sortie et réciproquement. De façon classique un routeur comprend au moins un décodeur d'instruction par port d'entrée, un circuit logique d'arbitrage, un système de commutation entre chaque entrée et chaque sortie, et de la mémoire, couramment une mémoire du type premier-entré/premier-sorti (FIFO) pour stocker temporairement les paquets de données, par exemple pendant un coup d'horloge, entre leur entrée et leur sortie. Chaque port d'entrée/sortie d'un routeur est associé à un port d'entrée/sortie d'un autre routeur ou d'un dispositif. Selon les structures le nombre de ports de chaque routeur d'un réseau de routage est constant ou variable.

De façon courante, dans un réseau de routeurs réalisé sur circuit intégré, le nombre de routeurs est réduit. Couramment seules quelques dizaines de routeurs sont utilisés dans un réseau de routage intégré.

On notera que certains des dispositifs connectés au réseau de routeurs peuvent eux-mêmes être utilisés comme routeurs quand ils disposent de plusieurs ports d'entrée/sortie, ce qui est par exemple le cas de nombreux processeurs.

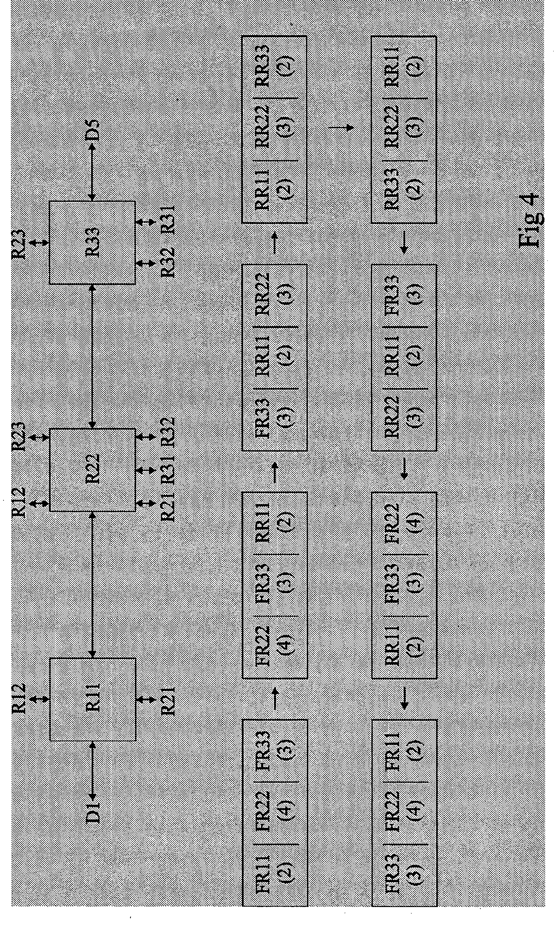

Par ailleurs, chaque paquet de données comprend un en-tête contenant notamment des instructions de routage et des données. Couramment, dans des systèmes intégrés sur puce, la taille de l'en-tête qui correspond notamment au chemin à suivre, n'est pas négligeable par rapport à la quantité de données transportées. Un procédé de routage est décrit par S. Evain et al., dans "A generic C'EST-A-DIRE tool for efficient NoC design", IEEE INTELLIGENT SIGNAL PROCESSING AND COMMUNICATION SYSTEMS, 2004. ISPACS 2004. PROCEEDINGS OF 2004 INTERNATIONAL. SYMPOSIUM ON, 18 novembre 2004 (2004-11-18), -19 novembre 2004 (2004-11-19) pages 728-733, XP002381911 page 729, colonne de droite, page 731, colonne de droite, figures 4, 9.

Ainsi, une première contrainte d'un réseau de routage et du procédé de routage associé est de minimiser la taille des instructions de routage permettant d'acheminer un paquet de données d'un dispositif à un autres.

Un autre impératif d'un réseau de routage intégré sur puce est de minimiser la dimension de chacun des routeurs et d'optimiser leurs diverses performances, notamment en termes de consommation et de complexité.

On cherche également à prévoir des procédés de routage dans lesquels un paquet de données arrivé à destination contienne les éléments nécessaires à son retour vers la source dont il provient.

C'est un objet de la présente invention que de prévoir un routeur et un réseau de routage permettant de satisfaire à au moins certaines des contraintes énoncées ci-dessus.

### Résumé de l'invention

L'invention est basée sur un mode d'identification particulier des ports d'entrée/sortie d'un routeur : plutôt que d'identifier ces ports de façon absolue, ils sont repérés de façon relative les uns par rapport aux autres.

Plus particulièrement, la présente invention prévoit un routeur dans lequel chacun des ports d'entrée/sortie est associé à des identifiants permettant à chacun des autres ports d'entrée/sortie de le repérer suivant un code propre à chacun d'entre eux, comprenant un moyen pour identifier dans un paquet incident une instruction de routage indiquant un identifiant aller du port de sortie désiré ; et un moyen pour renvoyer le paquet en supprimant dans l'instruction de routage ledit identifiant aller et en y insérant un identifiant retour.

Selon un mode de réalisation de la présente invention, les ports d'entrée/sortie sont classés cycliquement dans un sens déterminé, l'identifiant aller correspond au décalage cyclique entre le port d'entrée et le port de sortie, et l'identifiant retour correspond à la différence entre l'arité du routeur et ledit décalage.

La présente invention prévoit aussi un réseau de routage comprenant des routeurs du type ci-dessus, dans lequel un paquet envoyé d'une source à une destination comprend une instruction de routage contenant les identifiants successifs du port de sortie par rapport au port d'entrée pour chacun des routeurs par lesquels doit passer le paquet.

Selon un mode de réalisation de la présente invention, les identifiants sont disposés séquentiellement dans l'ordre des routeurs par lesquels doit passer le paquet, d'où il résulte que l'instruction de tête d'un paquet quittant un routeur est l'identifiant du routeur suivant.

Selon un mode de réalisation de la présente invention, dans chaque routeur, l'identifiant retour est inséré en queue de l'instruction de routage.

Selon un mode de réalisation de la présente invention, chaque destination comprend un moyen pour réordonner l'instruction de routage reçue, correspondant à une suite d'identifiants retour, de façon à former une instruction de routage destination-source

Selon un mode de réalisation de la présente invention, ladite différence est insérée après avoir inversé l'ordre de ses bits et, pour obtenir un chemin de retour, on lit l'instruction de routage en ordre inverse.

La présente invention prévoit aussi un circuit intégré contenant un réseau de routage du type ci-dessus.

La présente invention prévoit aussi un procédé de routage dans un réseau de routage dans lequel chaque routeur comprend un moyen pour identifier dans une instruction de routage d'un paquet incident un identifiant aller indiquant la position relative d'un port de sortie désiré, et un moyen pour renvoyer le paquet en supprimant dans l'instruction de routage ledit identifiant aller et en y insérant un identifiant retour, ce procédé comprenant, pour envoyer un message d'une source à une destination, l'étape consistant à envoyer à partir de la source la suite d'identifiants des ports de sortie que doivent sélectionner des routeurs prévus à l'avance pour acheminer un paquet de données de la source à la destination.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente schématiquement un réseau de routage entre divers dispositifs d'un système ;
la figure 2 illustre une convention de repérage des ports d'un routeur selon la présente invention ;
la figure 3 représente l'allure d'un paquet de données classique ;
la figure 4 illustre un exemple d'acheminement d'un paquet de données par un réseau de routage et l'évolution de l'en-tête du paquet de données avant et après passage dans chaque routeur et dispositif lors d'un transfert d'un dispositif source à un dispositif destination et en retour vers le dispositif source ; et
la figure 5 illustre un mode de stockage des instructions de routage dans l'en-tête d'un paquet de données selon un mode de réalisation particulier de la présente invention.

### Description détaillée

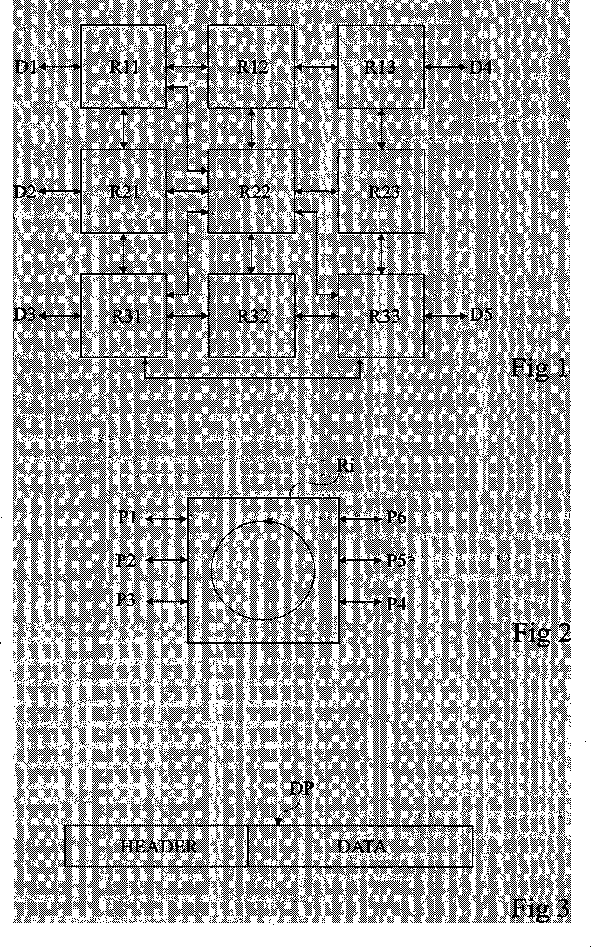

La figure 1 représente de façon schématique et simplifiée un exemple de réseau de routage comprenant neuf routeurs R11-R13, R21-R23, R31-R33 destinés à assurer la transmission de paquets de données entre des dispositifs D1 à D5 dont chacun peut être, par exemple, un processeur, une mémoire ou un routeur. Les liens entre les différents routeurs et dispositifs se voient sur la figure. On notera seulement que :
- les routeurs R12, R13, R23 et R32 ne comprennent que trois ports (respectivement reliés au dispositif D4, au routeur R12 et au routeur R23 en ce qui concerne le routeur R13),
- les routeurs R11 et R21 comprennent quatre ports,
- les routeurs R31 et R33 comprennent cinq ports, et
- le routeur R22 comprend sept ports, respectivement associés à chacun des autres routeurs du réseau, à l'exclusion du routeur R13.

L'exemple de la figure 1 est extrêmement simplifié et est seulement destiné à faciliter l'explication et la compréhension de la présente invention.

La figure 2 représente un routeur Ri. Pour chaque routeur, on définit une arité, c'est-à-dire le nombre de ports d'entrée/sortie associés à ce routeur. Dans l'exemple de la figure 2, le routeur comprend six ports d'entrée/sortie P1 à P6. En d'autres termes, ce routeur a une arité de 6. Selon la présente invention, quelle que soit la disposition matérielle effective des ports d'entrée/sortie, on classe a priori ces ports de façon cyclique et dans un sens déterminé. Dans la figure, les ports sont classés dans l'ordre de rotation trigonométrique (sens inverse des aiguilles d'une montre) du port P1 au port P6. Ainsi, on peut définir un nombre de pas ou décalage entre deux ports quelconques. Le port P5 est par exemple à deux pas, ou deux décalages cycliques, du port P3, et le port P3 est à quatre pas du port P5. Le décalage entre les ports P6 et P1 est égal à 1, et le décalage entre les ports P1 et P6 est égal à 5. Dans les deux exemples ci-dessus, on notera que la somme des décalages est égale à 6. En effet, il est clair que la somme du décalage entre un premier port et un deuxième port et du décalage entre ce deuxième port et le premier port est égale à l'arité.

Comme le représente la figure 3, tout paquet de données DP comprend un en-tête (HEADER) et des données (data). L'en-tête comprend notamment des instructions de routage. Selon l'invention, une instruction de routage entre une source et une destination comprend les valeurs de décalage successives entre port d'entrée et port de sortie de chacun des routeurs du trajet suivi.

Dans l'exemple illustré en figure 4, on suppose que l'on veut transmettre un paquet de données du dispositif D1 au dispositif D5 en passant par les routeurs R11, R22 et R33 (voir aussi la figure 1). En haut de la figure 4, on a représenté la suite de routeurs et de dispositifs impliqués dans le transfert considéré de paquet de données. Pour chacun des routeurs R11, R22 et R33 on a indiqué les ports autres que les ports utiles. Ainsi, comme l'illustrent les figures 1 et 4, pour qu'un paquet de données aille du dispositif D1 au dispositif D5, il faut que le routeur R11 fournisse un décalage de 2, le routeur R22 un décalage de 4, et lé routeur R33 un décalage de 3. Pour cela, l'instruction de routage, faisant partie de l'en-tête envoyée par l'élément D1 et représentée sous ce dispositif D1 en figure 4, comprend les décalages devant être successivement apportés par les routeurs R11, R22 et R33. Ces décalages sont respectivement désignés par FR11, FR22 et FR33 (F étant utilisé pour désigner le sens de propagation direct, c'est-à-dire de D1 vers D5). Ainsi, l'instruction de routage FR11-FR22-FR33 reçue par le routeur R11 est égale à 2-4-3.

Dans le routeur R11, la première instruction de décalage (FR11=2) entraîne que le paquet entrant ressortira par le deuxième port que l'on rencontre dans le sens trigonométrique, le port lié à un lien connecté à un port du routeur R22. Le routeur R11 renvoie le paquet incident en modifiant l'en-tête de la façon suivante :
- suppression de la première instruction de décalage (FR11), et
- adjonction d'une instruction de retour RR11 qui indique le nombre de décalages entre le port de sortie (allant du routeur R11 au routeur R22) et le port d'entrée (relié au dispositif D1). L'instruction de retour RR11 est le complément (2) de l'instruction FR11 (2) par rapport à l'arité (4) du routeur R11. De préférence, comme cela est représenté, les instructions de décalage sont disposées dans l'ordre FR22, FR33, RR11 avant d'arriver sur le routeur R22.

Le routeur R22 détecte l'instruction qui lui est destinée (FR22=4) et en conclut que le paquet incident doit ressortir par le quatrième port dans le sens trigonométrique après le port d'entrée, c'est-à-dire que le paquet de données doit négliger les ports dirigés vers les routeurs R21, R31 et R32 pour sortir par le port dirigé vers le routeur R33. A la sortie du routeur R22, l'instruction de routage qui était initialement FR22-FR33-RR11 est remplacée par l'instruction de routage FR33-RR11-RR22, c'est-à-dire que l'instruction de décalage aller FR22 est supprimée en tête de l'instruction de routage et que l'instruction de décalage de retour RR22 est ajoutée en queue d'instruction de routage. Ce procédé permet notamment d'éviter d'utiliser un pointeur sur l'instruction à décoder et/ou un bit spécifiant le sens de lecture selon qu'il s'agit d'un message aller ou retour.

Le routeur R33 reçoit l'instruction de décalage FR33=3. Le paquet de données sort donc vers le dispositif D5, l'instruction FR33 est supprimée et l'instruction RR33, à savoir la valeur 2, qui est le complément par rapport à l'arité (5) de l'instruction d'entrée (3) est disposée en fin d'instruction de routage.

Ainsi, à l'entrée du dispositif D5, on trouve successivement les instructions de décalage RR11-RR22-RR33 qui permettent le retour d'un paquet de données vers le dispositif à partir duquel il a été émis. Cette information peut être utilisée à diverses fins, par exemple :
- pour identifier au niveau du dispositif de destination (D5) la source (D1) du paquet de données reçu ;
- pour renvoyer un paquet de données à partir du dispositif de destination (D5) vers le dispositif source (D1), sans avoir connaissance de l'identité de la source. Le paquet de données renvoyé peut par exemple être un accusé de réception, une réponse, ou le paquet de données arrivé lui-même en cas de détection d'erreur aux niveaux du codage des instructions de routage ou des données transportées.

Pour effectuer un retour, l'instruction de routage RR11-RR22-RR33 est remise au niveau du dispositif D5 dans l'ordre RR33-R22-RR11 et le paquet est renvoyé du dispositif D5 au dispositif D1 d'une façon similaire à ce qui a été exposé précédemment, chaque routeur supprimant l'information RR qu'il reçoit et la remplaçant par une instruction FR correspondante, c'est-à-dire le complément par rapport à l'arité de l'instruction de décalage reçue. On retrouve donc au niveau du dispositif D1 le paquet avec, dans son en-tête, l'instruction de routage FR33-FR22-FR11, qui peut être éventuellement retournée et qui peut être utilisée à diverses fins, comme cela a été indiqué précédemment (vérification, renvoi, sécurité...).

La présente invention est susceptible de nombreuses variantes qui apparaîtront à l'homme de l'art. Notamment, l'en-tête (header) du paquet de données DP, voir figure 3, peut contenir d'autres informations en plus de l'information de routage correspondant aux valeurs de décalage indiquées précédemment. Ces autres informations peuvent correspondre à diverses informations de service. On pourra aussi prévoir d'insérer en plus, de façon classique, bien que cela ne soit pas nécessaire, des informations ID sur l'identité du dispositif source ou des routeurs traversés, de façon à augmenter encore la sécurité ou les capacités de vérification.

L'invention permet de prévoir des mots d'en-tête particulièrement courts puisqu'il est seulement nécessaire de prévoir dans l'instruction de routage les instructions de décalage des divers routeurs qui doivent être utilisés, et que l'on n'ajoute pas aux instructions de routage du trajet aller les instructions de routage du trajet retour. Au lieu de cela, on substitue dans une instruction de routage, à chaque instruction de décalage aller, une instruction de décalage retour. Ainsi, le mot d'en-tête garde une longueur constante au cours de la progression du paquet et lors du renvoi de ce paquet.

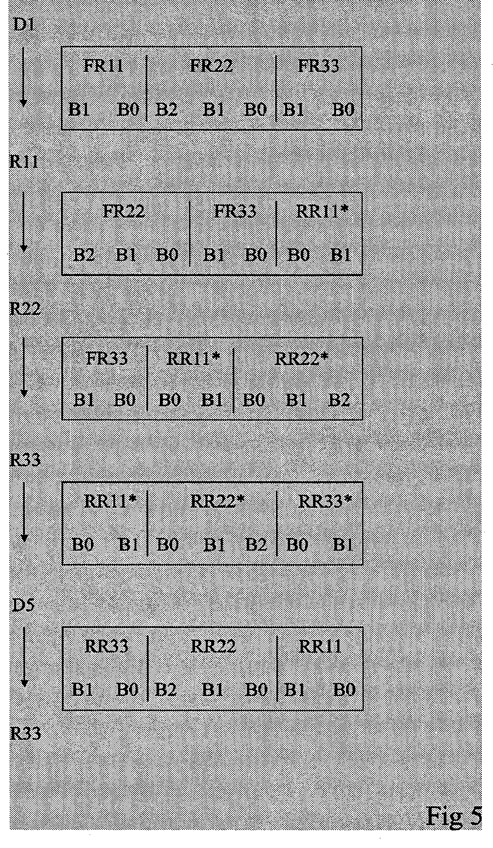

La figure 5 illustre un mode de mise en oeuvre particulier de la présente invention destiné à réduire encore la taille de l'instruction de routage. Dans cette figure, on a représenté l'évolution de l'instruction de routage lors du transfert d'un paquet du dispositif D1 au dispositif D5 en passant, comme dans l'exemple précédent, par les routeurs R11, R22 et R33. On suppose que, comme dans l'exemple illustré en figure 1, les différents routeurs ont des arités différentes. On notera que, pour un routeur d'arité 3, seuls deux décalages sont généralement utilisés, puisqu'un décalage de 3 désignerait une superposition des ports d'entrée et de sortie, c'est-à-dire une absence d'action. Ces deux décalages "utiles" peuvent être représentés par un nombre binaire à un seul bit. De même, un routeur d'arité 5 présente quatre décalages utiles qui peuvent être représentés par un nombre binaire à deux bits, et un routeur d'arité 9 présente huit décalages utiles qui peuvent être représentés par un nombre binaire à trois bits. Ainsi, le nombre de bits des instructions de décalage associées à chaque routeur dépend de l'arité du routeur et on peut minimiser le nombre de bits utilisé en tenant compte de ce fait. Dans l'exemple représenté précédemment, le routeur R11 a une arité de 4, le routeur R22 une arité de 7, et le routeur R33 une arité de 4. Ainsi, les décalages de ces routeurs peuvent être représentés par des nombres binaires respectivement à deux bits, à trois bits et à deux bits. Dans un nombre binaire, on désignera ci-après par B0 le bit de poids faible, par B1 le bit de poids plus élevé, par B2 le bit de poids plus élevé, et ainsi de suite. Ainsi, un nombre à deux bits sera appelé B1-B0 et un nombre à trois bits B2-B1-B0.

Si l'on reprend les instructions pour aller de D1 à D5 illustrées en relation avec la figure 4, l'instruction de routage envoyée par le dispositif D1 au routeur R11 comprend les instructions de décalage FR11, FR22, FR33, qui seront respectivement des nombres binaires à deux bits, à trois bits et à deux bits. Dans ce mode de réalisation, à la sortie du routeur R11, on ne place pas à la fin de l'instruction de routage l'instruction de décalage RR11 (le complément de FR11 par rapport à l'arité du routeur R11) mais l'instruction inversée RR11* dans laquelle le bit de poids faible B0 est mis en tête. De même, à la sortie du routeur R22, on aura successivement les décalages FR33, RR11* et RR12*, puis à la sortie du routeur R33 les instructions de décalage RR11*, RR12* et RR13*. Le fait de disposer les bits du complément par rapport à l'arité d'une valeur d'entrée dans un ordre inversé ne complique absolument pas les circuits logiques de calcul de ce complément. Par contre, dans le dispositif destination D5, pour obtenir la séquence de décalage de retour RR33-RR22-RR11, il suffira de lire le mot d'instruction RR11*-RR12*-RR13* de gauche à droite au lieu de le lire de droite à gauche. En d'autres termes, l'instruction de routage dans son ensemble à la sortie du dispositif D5 correspond à un retournement de l'instruction reçue par D5. Ceci peut être réalisé particulièrement simplement par un croisement de fils.

Dans ce qui précède, on n'a pas indiqué la façon dont chaque routeur identifie l'instruction de décalage qui lui est destinée. Toutefois, ceci ne pose aucun problème puisque chaque routeur connaît sa propre arité et sait que l'instruction qui lui est destinée est une instruction d'un nombre de bits donné. Ainsi, chaque routeur regardera simplement les premiers bits pertinents de l'instruction de routage : les deux premiers pour le routeur R11, les trois premiers pour le routeur R22 et les deux premiers pour le routeur R33.

Cette réalisation particulière de l'invention permet d'atteindre encore mieux les objets visés en réduisant la dimension de l'instruction de routage dans tout paquet de données transmis.

La présente invention a été décrite dans le cadre d'un mode de réalisation particulier, actuellement préféré. De façon générale, la présente invention vise un procédé particulièrement simple de routage dans un réseau de routage dans lequel, pour chaque routeur, les ports d'entrée/sortie sont définis les uns par rapport aux autres de façon relative, et pas nécessairement par le procédé de décalage cyclique décrit en détail ci-dessus. Par exemple, chaque port pourra être repéré par rapport aux autres par un numéro d'ordre. Ainsi, chaque port aura par rapport à un autre un identifiant aller et un identifiant retour.

Parmi les choix possibles d'identifiants aller et retour, on comprendra que l'on peut choisir des combinaisons cryptées permettant de mieux résister à des tentatives de fraude. L'invention permet en effet d'identifier l'émetteur car les instructions de routage retour révèlent son identité. Ce type d'identification peut remplacer ou compléter les techniques courantes d'authentification par transmission de certificat.

L'invention peut être utilisée par un routage de type routage par défaut ("forward by default") où les instructions ne s'adressent pas à tous les routeurs traversés mais simplement à certains d'entre eux.

## Revendications

1. Routeur dans lequel chacun des ports d'entrée/sortie est associé à des identifiants permettant à chacun des autres ports d'entrée/sortie de le repérer suivant un code propre à chacun d'entre eux, comprenant :
un moyen pour identifier dans un paquet incident une instruction de routage indiquant un identifiant aller du port de sortie désiré ; et
un moyen pour renvoyer le paquet en supprimant dans l'instruction de routage ledit identifiant aller et en y insérant un identifiant retour.

2. Routeur selon la revendication 1, dans lequel les ports d'entrée/sortie sont classés cycliquement dans un sens déterminé, l'identifiant aller correspond au décalage cyclique entre le port d'entrée et le port de sortie, et l'identifiant retour correspond à la différence entre l'arité du routeur et ledit décalage.

3. Réseau de routage comprenant des routeurs selon la revendication 1 ou 2, dans lequel un paquet envoyé d'une source à une destination comprend une instruction de routage contenant les identifiants successifs du port de sortie par rapport au port d'entrée pour chacun des routeurs par lesquels doit passer le paquet.

4. Réseau de routage selon la revendication 3, dans lequel les identifiants sont disposés séquentiellement dans l'ordre des routeurs par lesquels doit passer le paquet, d'où il résulte que l'instruction de tête d'un paquet quittant un routeur est l'identifiant du routeur suivant.

5. Réseau de routage selon la revendication 4, dans lequel, dans chaque routeur, l'identifiant retour est inséré en queue de l'instruction de routage.

6. Réseau de routage selon l'une quelconque des revendications 3 à 5, dans lequel chaque destination comprend un moyen pour réordonner l'instruction de routage reçue, correspondant à une suite d'identifiants retour, de façon à former une instruction de routage destination-source.

7. Réseau de routage selon les revendications 2 et 6, dans lequel ladite différence est insérée après avoir inversé l'ordre de ses bits et dans lequel, pour obtenir un chemin de retour, on lit l'instruction de routage en ordre inverse.

8. Circuit intégré contenant un réseau de routage selon l'une quelconque des revendications 3 à 7.

9. Procédé de routage dans un réseau de routage dans lequel chaque routeurs identifie dans une instruction de routage d'un paquet incident un identifiant aller indiquant la position relative d'un port de sortie désiré, et renvoie le paquet en supprimant dans l'instruction de routage ledit identifiant aller et en y insérant un identifiant retour, ce procédé comprenant, pour envoyer un message d'une source à une destination, l'étape consistant à envoyer à partir de la source la suite d'identifiants des ports de sortie que doivent sélectionner des routeurs prévus à l'avance pour acheminer un paquet de données de la source à la destination.

## Patentansprüche

1. Ein Router in dem alle Eingangs- Ausgangsanschlüsse mit Identifizierern assoziiert sind, die jedem der anderen Eingangs-Ausgangsanschlüsse erlauben diese zu lokalisieren, entsprechend einem Code der spezifisch für jeden der Eingangs- Ausgangsanschlüsse ist, wobei der Router Folgendes aufweist:
Mittel zum Identifizieren einer Routinganweisung in einem ankommenden Paket, wobei die Routinganweisung einen Vorwärtsidentifizierer des gewünschten Ausgangsanschlusses anzeigt; und
Mittel zum Zurücksenden des Pakets der Routinganweisung und Einsetzen eines Rückkehridentifizierers darin, während der Vorwärtsidentifizierer unterdrückt wird.

2. Der Router nach Anspruch 1, wobei die Eingangs- Ausgangsanschlüsse zyklisch in einer bestimmten Reihenfolge sequenziert sind, wobei der Vorwärtsidentifizierer einer zyklischen Verschiebung zwischen dem Eingangsanschluss und dem Ausgangsanschluss entspricht, und wobei der Rückkehridentifizierer der Differenz zwischen der Stelligkeit und der Verschiebung des Routers entspricht.

3. Ein Routingnetzwerk, das Router gemäß Anspruch 1 oder 2 aufweist, wobei ein Paket, das von einer Quelle zu einem Ziel geschickt wird, eine Routinganweisung aufweist, die die nachfolgenden Identifizierer des Ausgangsanschlusses bezüglich des Eingangsanschlusses aufweist, für jeden der Router durch den das Paket läuft.

4. Das Routingnetzwerk nach Anspruch 3, wobei die Identifizierer nacheinander angeordnet sind, in der Reihenfolge der Router durch den das Paket laufen muss, wobei der Header, bzw. die Kopfanweisung eines Pakets, das einen Router verlässt, der Identifizierer des nächsten Routers ist.

5. Das Routingnetzwerk nach Anspruch 4, wobei in jedem Router der Rückkehridentifizierer an dem Ende der Routinganweisung eingefügt ist.

6. Das Routingnetzwerk nach einem der Ansprüche 3 bis 5, wobei jedes Ziel Mittel aufweist zum re-sequenzieren der empfangenen Routinganweisung, entsprechend einer Sequenz von Rückkehridentifizierern, um eine Ziel-zu-Quelle Routinganweisung zu bilden.

7. Das Routingnetzwerk nach Ansprüche 2 und 6, wobei die Differenz eingefügt wird nachdem die Reihenfolge ihrer Bits invertiert wurde und wobei, um einen Rückkehrpfad zu erhalten, die Routinganweisung in umgekehrter Reihenfolge gelesen wird.

8. Ein integrierter Schaltkreis, wobei der integrierte Schaltkreis das Routingnetzwerk nach einem der Ansprüche 3 bis 7 aufweist.

9. Ein Routingverfahren in einem Routingnetzwerk, wobei jeder Router in einer Routinganweisung eines ankommenden Pakets einen Vorwärtsidentifizierer identifiziert, der die relative Position eines gewünschten Ausgangsanschlusses anzeigt, und wobei jeder Router das Paket durch Unterdrücken des Vorwärtsidentifizierers innerhalb der Routinganweisung und durch Einfügen eines Rückgabeidentifizierers darin zurücksendet, wobei das Verfahren für das Senden einer Nachricht von einer Quelle zu einem Ziel, den Schritt des Sendens der Sequenz der Identifizierer der Ausgangsanschlüsse von der Quelle aufweist, die durch die Router ausgewählt werden sollen und die im voraus bereitgestellt werden um ein Datenpaket von der Quelle zu dem Ziel zu übermitteln.

## Claims

1. A router in which each of the input/output ports is associated with identifiers enabling each of the other input/output ports to locate it according to a code specific to each of them, comprising:
means for identifying in an incident packet a routing instruction indicating a forward identifier of the desired output port; and
means for sending back the packet while suppressing said forward identifier from the routing instruction and inserting a return identifier therein.

2. The router of claim 1, wherein the input/output ports are cyclically sequenced in a determined order, the forward identifier corresponds to the cyclic shift between the input port and the output port, and the return identifier corresponds to the difference between the router's arity and said shift.

3. A routing network comprising routers of claim 1 or 2, wherein a packet sent from a source to a destination comprises a routing instruction containing the successive identifiers of the output port with respect to the input port for each of the routers through which the packet must transit.

4. The routing network of claim 3, wherein the identifiers are arranged sequentially in the order of the routers through which the packet must transit, whereby the head instruction of a packet leaving a router is the identifier of the next router.

5. The routing network of claim 4, wherein, in each router, the return identifier is inserted at the end of the routing instruction.

6. The routing network of any of claims 3 to 5, wherein each destination comprises means for resequencing the received routing instruction, corresponding to a sequence of return identifiers, to form a destination-to-source routing instruction.

7. The routing network of claims 2 and 6, wherein said difference is inserted after having inverted the order of its bits and wherein, to obtain a return path, the routing instruction is read in reverse order.

8. An integrated circuit containing the routing network of any of claims 3 to 7.

9. A routing method in a routing network wherein each router identifies, in a routing instruction of an incident packet, a forward identifier indicating the relative position of a desired output port, and sends back the packet by suppressing from the routing instruction said forward identifier and by inserting a return identifier therein, this method comprising, to send a message from a source to a destination, the step of sending from the source the sequence of identifiers of the output ports to be selected by routers provided in advance to convey a data packet from the source to the destination.
